Europäisches Patentamt

European Patent Office

Office européen des brevets

(11) Veröffentlichungsnummer: **0 503 739 A1**

# EUROPÄISCHE PATENTANMELDUNG

(21) Anmeldenummer: **92200681.2**

(22) Anmeldetag: **10.03.92**

(51) Int. Cl.5: **A01K 5/02**, B65G 33/32,
B65G 33/16

(30) Priorität: **11.03.91 NL 9100431**

(43) Veröffentlichungstag der Anmeldung:
**16.09.92 Patentblatt 92/38**

(84) Benannte Vertragsstaaten:
**BE DE DK FR NL**

(71) Anmelder: **van de Vliert, Jakob**
**Edeseweg 2**
**NL-6733 AE Wekerom(NL)**

(72) Erfinder: **Bouw, Jacob**
**Klomperweg 96**
**NL-6741 PJ Lunteren(NL)**

(74) Vertreter: **de Wit, Gerard Frederik, Ir. et al**
**Breitnerlaan 146**
**NL-2596 HG Den Haag(NL)**

(54) **Futterdosierwagen.**

(57) Ein Futterdosierwagen mit einem Schraubförderer (10,11,12,13), die sich von horizontal hoch beugt zu vertikal. Das sich in einem örtlich gebogenen Rohr befindende schraublinienförmige Transportorgan hat keinen Kern und ist leicht gespannt, sodass es im gebogenen Teil vom Rohr frei bleibt. Das Abfuhrende des von dem schraublinienförmigen Organ (11) und dem Rohr (10,12,13) gebildeten Schraubförderers ein Lagerteil (25) enthält, in der ein mit dem schraublinienförmigen Organ (11) axial verstellbar ist, sodass das schraublinienförmige Organ gespannt werden kann. Ein Stab (28) mit einer Spitze (29) und Flügel (30,31,32,33) sorgen dafür, dass kein Futter bei der Abfuhr hinterbleibt, was später in unerwünschter Weise herunterfallen könnte.

FIG. 1

Die Erfindung betrifft einen Futterdosierwagen mit einem Vorratsbehälter mit wenigstens an der Unterseite zu einander neigenden Seitenwänden und einem nach oben wenigstens teilweise offenen, hauptsächlich horizontalen Rohr in dem sich ein schraublinienförmiges Organ befindet, einem elektromotor um das Organ anzutreiben an der Seite, wovon abtransportiert wird, einem Schraubförderer um mittels des genannten Organs angeführtes Futter hoch zu bringen und seitliche Abfuhröffnungen um hoch gebrachtes Futter in abgemessenen Portionen abzugeben, wobei die Dosierung durch die Laufzeit des Förderers bestimmt wird.

Solche Futterdosierwagen werden bereits Jahre benutzt und können was die Betriebsicherheit und Dosierungsgenauigkeit in vielen Fällen für die Praxis ausreichend erachtet werden.

Es gibt jedoch bestimmte Nachteile, die sich auswirken in eine geringere Dosiergenauigkeit bei kleinen Dosiermengen, die Notwendigkeit einer Zeitschaltung und höheren Energieverbrauch als möglich ist, wie im Folgenden näher erörtert wird.

Ein derartiger Futterdosierwagen hat ausser dem horizontalen Schraubförderer einen vertikalen Schraubförderer, der das vom horizontalen Schraubförderer zugeführte Futter hoch transportiert. Dabei kann die Schwierigkeit eintreten, dass Stau der Förderer eintritt, indem der horizontale Förderer Futter zuführt wenn der vertikale Förderer dafür noch keinen Platz gemacht hat. Diese Schwierigkeit könnte behoben werden durch den vertikalen Förderer etwas eher in Gang zu setzen als den Horizontalen. Dies geschah durch den Förderern je einen eigenen Motor zu geben und eine Zeit- oder Verzögerungsschaltung zu benutzen um die günstigste Abstimmung der Zeitpunkte des Starts und der Abschaltung der Antriebsmotoren zu steuern.

Die Dosierungen werden dabei von der Zeitspanne der Bewegung der Förderer bestimmt.

Nähere Untersuchungsarbeiten haben ins Licht gestellt, dass bei Aenderung der abzugebenden Mengen pro Arbeitszyklus der Förderer die Dosierung nicht nur bestimmt wurde von der Wirkung der Förderer selbe, sondern auch von der Tatsache, dass durch den Uebergang des horizontalen auf den vertikalen Förderer letzterer nicht immer ganz mit Futter gefühlt war. Es stellte sich heraus, dass dieser Faktor schwierig zu beherrschen war. Im allgemeinen war die Dossiergenauigkeit befriedigend, sei es dass nach Aenderung des Sollwertes bei kleinen Dosierungen relativ wichtige Abweichungen entstanden, die der unvollständigen Füllung des vertikalen Förderers zuzumuten sind.

Auch hat sich bei Untersuchungen herausgestellt, dass der Uebergang zwischen horizontalen und vertikalen Förderern zu einer erhöhten Belastung des Motors des horizontalen Förderers führen kann, wenn das von ihm zugeführten Futter beim gesagten Uebergang staut. Ueberraschenderweise hat sich dabei herausgestellt, dass die notwendige Leistung und der elektrische Energieverbrauch dieses Motors hierdurch bestimmt wurden und erheblich grösser waren als der Fall sein würde ohne diese Stauung.

Einschränkung des Verbrauchs elektrischer Energie ist sehr wichtig in einem Futterdosierwagen weil man diese vorzugsweise mit Akkumulatoren antreibt. Bei immer grösser werdenden Schweinezucht und -mastbetriebe soll zum Beispiel pro Futterung eine Menge von einigen Tonnen Futter abgegeben werden. Dafür ist eine erhebliche Energieabgabe der Akkumulatore notwendig.

Andererseits ist es durchaus erwünscht, wenn nicht notwendig, dass alle Stallabschnitte mit Futter versorgt werden können ohne dass der Dosierwagen wieder geladen wird. Wenn grosse Akkumulatoren benutzt werden verliert man Laderaum, wobei obendrein das Gewicht des Wagens zunimmt. Dabei soll darauf geachtet werden, dass kaum Freiheit besteht die Abmessungen solcher Wagen zu vergrösseren, weil sie geeignet sein sollen in bereits bestehenden Stallen benutzt zu werden, wo die Gänge schmall und die Kurven eng sind.

Nachdem entdeckt wurde, dass der Uebergang vom horizontalen auf den vertikalen Förderer den schwierigen Punkt der Konstruktion war, hat der Anmelder versucht mit einem einzigen Antrieb auszukommen. Dabei ist er anfänglich ausgegangen von üblichen Förderern, nämlich mit einer beidseitig gelagerten Welle mit propellerartigen Schaufeln. Versuche solche Schraubförderer mit einander zu kuppeln, zum Beispiel mittels Gabelkupplungen oder flexibelen Kupplungen, scheiterten jedoch, wobei Beschädigung oder Bruch der Kupplungen ziemlich öfters eintrat und die erforderte Motorkapzität hoch war. Ausserdem war die Dosiergenauigkeit bestimmt nich besser, was möglicherweise den Unregelmässigkeiten in der Förderung bei den Knicken zwischen geraden mit einander gekuppelten Teilen des derart zusammengesetzten Schraubförderers zuzumuten war.

Die Erfindung bezweckt die obengenannten Nachteile in Aufwand ersparender Weise zu beseitigen. Dazu wird vorgesehen, dass es einen einzigen Schraubförderer mit schraublinienförmigem Organ gibt das an der einen Seite in dem genannten horizontalen Rohr liegt und zusammen mit einer allmählich hoch gebogenen Verlängerung des Rohrs den Förderer zum Hochbringen des Futters bildet und dass das schraublinienförmige Organ keinen Kern hat.

Ein Futterverteilwagen mit einem flexibelen Schraubförderer mit einem Winkel von etwa 90° von schräg nach unten bis schräg nach oben und wieder zurück, zeigt die französiche Patentschrift FR-A-2 424 208. Eine Dosierung ist hierbij nicht gegeben; der Hauptzweck des flexibelen Förderers ist die Möglichkeit das Futter an gewisse Stellen zu bringen. Es erscheint zweifelhaft ob bei dieser bekannten Konstruktion Berührung zwischen dem schraublinienförmigen Organ und Rohr ausreichend vorgebeugt werden kann. Weiter hat dieser bekannte Förderer einen von einem Traktormotor abgeleiteten Antrieb, was bedeutet dass fast ein unbegrenztes Vermögen zur Verfügung steht.

Bei der Erfindung hat sich herausgestellt, dass für die ganze Förderung, d.h. der horizontale Teil, die Kurve und eventuell noch ein vertikaler Teil nicht mehr Vermögen notwendig war als bei einem Wagen mit separaten Förderern nur für die horizontale Förderung. Dass ganze benötigte Vermögen beträgt etwa 60% von dem was vorher benötigt wurde. Dabei wurde ein Elektromotor mit Magnetschalter erspart, wobei ausserdem die Zeitschaltung einfacher wurde. Der Vorratsraum wurde nicht kleiner, weil der gebogene Förderteil hinter einer schräg nach unten neigenden Wand angeordnet werden kann, welche Wand auch bei der vorher benutzten Konstruktion anwesend war, um die gute Herunterströmung des Futters zu sichern. Durch die Vereinfachungen nimmt die Betriebssicherheit zu und die Unterhaltung ab.

Einer weiteren Ausbildung der Erfindung gemäss wird vorgesehen, dass der hoch gebogene Teil des schraublinienförmigen Organs in einem Rohr liegt mit einem aussenseitigen Krümmungsradius von wenigstens 100, vorzugsweise etwa 60 cm. Hierbei wird darauf hingewiesen, dass grössere Krümmungsradien bei den heutigen Futterdosierwagen nicht nötig oder erwünscht sind und dass eine ausgezeichnete störungsfreie Wirkung bekommen wurde mit einer Zahl von Futterabgaben, die übereinstimmt mit der Zahl Abgaben für eine Durchschnittsbetrieb in mehr als zwei Jahre.

In dieser Hinsicht wird darauf hingewiesen, dass Futterdosierwagen geeignet sein sollen für verschiedenartiges Futter, wie Brocken, Schutt, Krume oder Mehl. Diese Futterarte können sich mechanisch verschieden verhalten bei verschiedenen Zusammensetzungen und Feinheiten. Wenn der Futterdosierwagen nachtsüber gefüllt ist, kann es geschehen, dass zum Beispiel Mehl etwas heruntersinkt. Bei den bekannten Futterdosierwagen konnte dies anfänglich zu einer stossenden Wirkung und geringerer Genauigkeit führen. Bei der Erfindung hat man hiervon weniger Ungemach, sogar bei dem genannten relativ kleiner Krümmungsradius, weil der Klemmpunkt, nämlich der Uebergang zwischen den Förderern, fehlt.

Schraublinienförmige Förderorgane für Futter wurden bisher ausschliesslich ziehend benutzt. Dies bedeutet, dass das Futter zu der angetriebenen Seite bewegt wurde. Bei drückender Benutzung, also die Antriebsseite an der Futterzufuhrseite konnte unregelmässige Wirkung eintreten durch Zusammendrückung des schraublinienförmigen Organs in der Längerichtung. Es hat sich herausgestellt, dass diese Schwierigkeit in einem Futterdosierwagen behoben werden kann, indem das schraublinienförmige Organ etwas unter Langsspannung steht. Ueberraschend ist dabei, dass diese Langsspannung keine extra Reibung des schraublinienförmigen Organs im gebogenen Teil des Förderers verursacht.

Erfindungsgemäss kann diese Langsspannung leicht und in einstellbarer Weise bekommen werden wenn einer weiteren Ausbildung der Erfindung gemäss das Abfuhrende des von dem schraublinienförmigen Organ und dem Rohr gebildeten Schraubförderers ein Lagerteil enthält, der axial verstellbar in einem Lager ist, sodass das schraublinienförmige Organ gespannt werden kann.

Bei den bekannten Förderern konnte beim Uebergang zwischen Vorratsbehälter und Förderer eine Stauung eintreten, die einen stark vergrösserten Widerstand verursachte. Um dies zu begegnen wurde über den Teil des Förderers, wo dieser in direkter Verbindung mit dem Futter im Vorratsbehälter steht ein brückenförmiges Organ gelegt, sodass es zwei Stellen gab wo das Futter den Förderer erreichen konnte. Eine solche Brücke hatte vonselbstredend schräge Seiten um die Futterzufuhr zu erleichtern. Beim Uebergang des einen Futters auf das andere konnte es dabei erwünscht sein, die Stelle der Brücke anzupassen bis eine gute Wirkung bekommen war. Bei Anwendung des schraublinienförmigen Organs ohne zentralen Kern hat sich herausgestellt, dass diese Schwierigkeiten nicht eintreten. Deshalb wird einem weiteren Aspekt der Erfindung gemäss vorgesehen, dass das schraublinienförmige Organ eine einzelne ununterbrochene Verbindung mit der Unterseite des Vorratsbehälters hat.

Weil bei der Erfindung ein Motor erspart wird kommt grundsätzlich Raum frei für die Anordnung von Akkumulatoren bezugsweise ergänzender Akkumulatoren.

Wenn erfindungsgemäss der Futterdosierwagen an der Oberseite des Förderers ein Schwenkrohr hat, das nach beiden Seiten des Wagens geschwenkt werden kann, besteht die Möglichkeit dass das Schwenkrohr bei seiner Bewegung über die Austrittsöffnung des Förderers dort beharrendes Material lockert, das dann durch das Rohr heruntergleitet und auf dem Boden klecken kann. Einer weiteren Ausbildung der Erfindung gemäss wird dieses begegnet durch vorzusehen dass im Endbezirk des schraublinienförmigen Organs ein zentraler zilindrischer Stab angeordnet ist mit einem Durchmesser, der erheblich kleiner ist als der Innendurchmesser des schraublinienförmigen Organs und einer der Förderrichtung entgegen gerichteten Spitze. Die Spitze bricht die Futtermasse und lässt diese ohne unregelmässigkeiten durch die Oeffnungen austreten. Eine Verbesserung kann noch bekommen werden wenn der Stab in Höhe der Seitenöffnungen radiale Flügel trägt zwischen benachbarten Windungen des schraublinienförmigen Organs.

Im Folgenden wird die Erfindung näher erörtert an Hand der Zeichnung, worin:

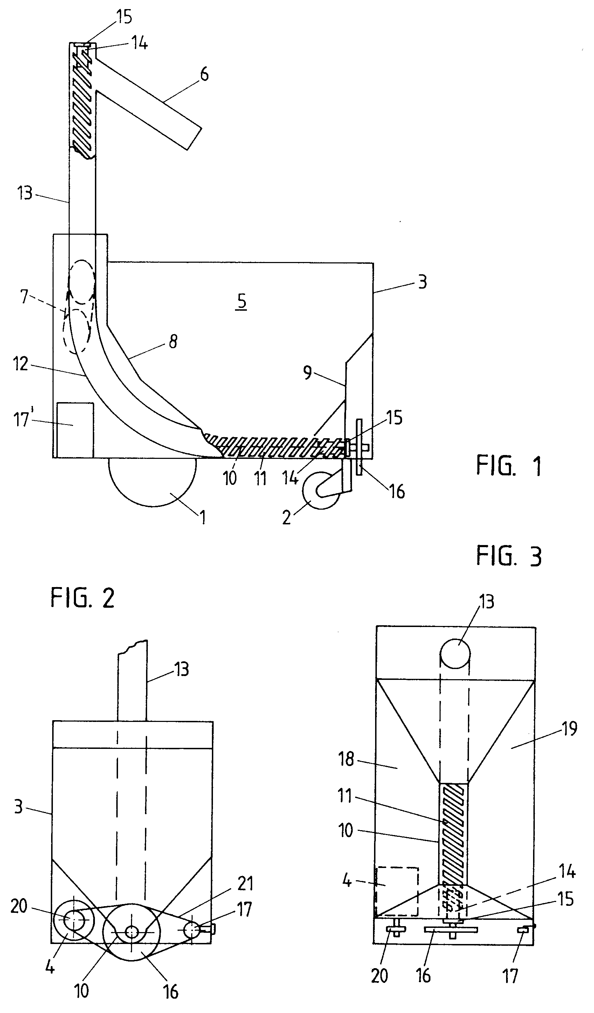

Fig. 1 schematisch eine Seitenansicht eines Futterdosierwagens gemäss der Erfindung zeigt;

Fig. 2 eine Hinteransicht davon ist;

Fig. 3 eine Obenansicht ist; und

Fig. 4 eine Einzelheit zeigt.

Der gezeigte Futterdosierwagen ist, abgesehen der Weise in welcher das Futter aus den Vorratsbehälter bewogen wird, an sich bekannt. Ein derartiger Wagen hat feste Räder 1, Schwenkräder 2, eine Behälter 3, einen Elektromotor 4, einen Futtervorratsteil 5 und ein vorzugsweise nach links und rechts schwenkbares Abfuhrrohr 6. In bekannter Weise ist es auch möglich niedriger liegenden Abfuhrröhre anzubringen, die schematisch mit unterbrochenen Linien 7 angedeutet sind.

Der Vorratsbehälter 5 hat an der Unterseite eine schräge Vorfläche 8. eine geknickte Hinterfläche 9 und schräge Seitenflächen 18 und 19. Diese münden bei der Oberseite einer nach oben offene Rinne 10, in der ein schraublinienförmiges Forderorgan 11 liegt. Die offene Rinne 10 schliesst bei der Unterseite der Fläche 8 an eine kreisförmig gebogene Rohr 12 an. Dieses ist, wenn ein hoch gelegenes Abfuhrrohr 6 benutzt wird, an seiner unteren Seite verlängert mit einem geraden Teil 13.

Das Futter, das in das an seiner Oberseite offene Rohr 10 fällt wird durch den Antrieb des schraubenlinienförmigen Organs erst nach links bewogen und nach Passierung der Kurve 12 nach oben.

Ein solches schraublinienförmige Organ kann an einem Rohrstumpf befestigt werden, wo es umher liegt und möglicherweise mit einer Klemme befestigt ist. Dieser Rohrstumpf 14 ist einem Kipplager 15 gelagert. Der Motor 4 treibt ein als variomatic ausgebildetes Antriebsrad 20 an, das mittels einer Saite 21 ein Uebertragungsrad 16 antreibt. Die Saite 21 kann mit einem Spannrad 17 gespant werden um das Uebertragungsverhältnis der Variomatic einzustellen.

Der erfindungsgemässe Futterdosierwagen benötigt im Gegensatz zum Bekannten nur einen einzigen Antriebsmotor und der Raum, der bei den bekannten Futterdosierwagen an der Vorderseite notwendig was um dort einen Motor zu plazieren für den Antrieb eines separaten vertikalen Hochbringvorrichtung, ist nun frei. Dieser Raum, der auf beiden Seiten des Rohres 12 liegt und mit den unterbrochenen Linien 17 angedeutet ist, kann für die Unterbringung der Akkumulatoren benutzt werden.

Weil die erfindungsgemässe Konstruktion erheblich weiniger Energie benötigt für eine gleiche geforderte Menge kann der erfindungsgemässe Wagen erheblich mehr Futter pro Aufladung aufnehmen bei einer gewissen Kapazität der Akkumulatoren. Weil auch noch Raum zur Verfügung gekommen ist wie bei 17' angedeutet, kann die Kapazität des Wagens erheblich erhöht werden, nämlich einerseits durch eine Vergrösserung des Akkumulatorenvolumes und anderseits durch einen geringeren Energiebedarf. Dennoch ist der zu benutzende Inhalt des Wagens nicht kleiner als bei der bekannten Konstruktion mit zwei Fördereinrichtungen, nämlich eine Horizontale und eine Vertikale.

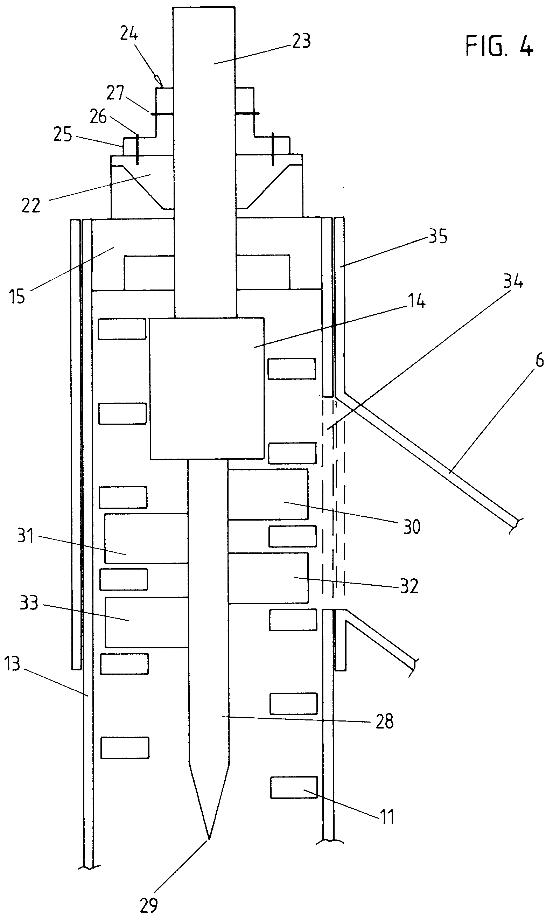

An der Oberseite der Förderstrecke ist das schraubenlinienförmige Organ vorzugsweise in der in der Fig. 4 angedeuteten Weise gelagert.

In fig. 4 ist mit 13 wieder das Transportrohr angedeutet, mit 14 der Rohrstumpf, mit 15 ein Lager dessen oberer Teil 22 sich hinsichtlich des festen Teils zusammen mit der Achse 23 drehen kann. Am Lagerteil 22 ist eine Hülse 24 befestigt mit einer Flansche 25, die mit Schrauben 26 im Lagerteil 22 befestigt ist und von scharfen Spitzen versehenen Schrauben 27 hat zur Zusammenarbeit mit der Achse 23.

Die Achse 23 hat eine nach untern gerichtete Verlängerung 28 mit einer Spitze 29. Diese Verlängerung trägt Schuppen 30,31,32,33. Im Rohr 13 befindet sich ein Loch 34, das eine Verbindung mit dem Rohr 6 bildet. Das Rohr 6 kann weiter mittels eine Hülse 35 um das Rohr 13 gedreht werden.

Wenn die Achse 23 hoch gezogen wird und nachher mit den Schrauben 27 fest gesetzt wird, kann das schraublinienförmige Organ 11 gespannt werden. Bei der richtige Spannung ist es vollständig frei vom kurvenförmigen Teil des Rohres.

Die Spitze 29 mit der stabförmigen Verlängerung 28 zerbrechen die Futtersäule, die fast vollständig innerhalb des schraublinienförmigen Organs 11 liegt. Die Schaufeln 30,31,32 und 33 sorgen dafür, dass das Futter, das die Höhe der Oeffnung 34 erreicht sofort durch das Rohr 6 abgeführt wird. Ohne die Teile 28,29,30,31,32 und 33 war es nämlich möglich, dass wenn das Rohr 6 mittels der Hülse 35 um das Rohr 13 geschwenkt wurde, Futter herunter kam, das dann auf den Bodem fiel.

Es wird noch darauf hingewiesen, dass bei einer gebogenen Fördervorrichtung es nicht möglich ist, dass eine Futtersäule mit dem Förderorgan 11 mitdreht und in der Weise eine Hemmung des Futtertransports verursacht.

Es hat sich herausgestellt, dass das Futter eine Art Schmierung bildet, wodurch Verschleiss und Reibung in hohem Masse herabgesetzt werden.

Es wird klar sein, dass die Erfindung nicht zu den gezeichneten und im Obigen beschriebenen Ausführungen begrenzt ist. So ist es in üblicher Weise möglich Instrumente, wie Zeituhren und Adjustiermittel zu montieren. Ausserdem ist die Erfindung nicht beschränkt zu einem Akkumulatorenwagen und der erfindungsgemässe Wagen kann mittels einer flexibelen Schnurr mit einem Elektrizitätsanschluss verbunden werden, sei es dass in diesem Beispiel die Vorteile geringer sind als beim Akkumulatorenwagen.

Die Abmessungen des Wagens sind ebenso keine Beschränkungen unterworfen und werden öfters, in derselben Weise wie bei bekannten Futterdosierwagen abhangen von der verfügbaren Gangbreite bevor den Futtertrögen der Stallen. Die Höhe wird gleichfalls bestimmt von einerseits der Höhe des Futtersilos und anderseits der Zahl der zu futternden Tiere pro Abteilung.

Die Dossiergenauigkeit des erfindungsgemässen Wagens ist die Gleiche bei vollem Wagen und fast leerem Wagen. Bei der bekannten Wagen trat öfters einen Verlauf der Dosiermenge ein bei sich verringender Füllung.

## Patentansprüche

1. Futterdosierwagen mit einem Vorratsbehälter (5) mit wenigstens an der Unterseite zu einander neigenden Seitenwändern (18,19) und einem nach oben wenigstens teilweise offenen, hauptsächlich horizontalen Rohr (10) in dem sich ein schraublinienförmiges Organ (11) befindet, einem elektromotor (17') um das Organ anzutreiben an der Seite, wovon abtransportiert wird, einem Schraubförderer um mittels des genannten Organs angeführtes Futter hoch zu bringen und seitliche Abfuhröffnungen (6,7) um hoch gebrachtes Futter in abgemessenen Portionen abzugeben, wobei die Dosierung durch die Laufzeit des Förderers bestimmt wird, **dadurch gekennzeichnet,** dass es einen einzigen Schraubförderer (10,11,12,13) mit schraublinienförmigem Organ (11) gibt das an der einen Seite in dem genannten horizontalen Rohr (10) liegt und zusammen mit einer allmählich hoch gebogenen Verlängerung (12) des Rohrs den Förderer zum Hochbringen des Futters bildet und dass das schraublinienförmige Organ keinen Kern hat.

2. Futterdosierwagen nach Anspruch 1, **dadurch gekennzeichnet,** dass der hoch gebogene Teil des schraublinienförmigen Organs in einem Rohr (12) liegt mit einem aussenseitigen Krümmungsradius von höchstens 100, vorzugsweise etwas 60 cm.

3. Futterdosierwagen nach Anspruch 1 oder 2, **dadurch gekennzeichnet,** dass der hoch gebogene Teil des schraublinienförmigen Organs annäherend einen Kreisbogen bildet von 90° oder nahezu 90°.

4. Futterdosierwagen nach einem oder mehreren der vorangehenden Ansprüche, **dadurch gekennzeichnet,** dass das Abfuhrende des von dem schraublinienförmigen Organ (11) und dem Rohr (10,12,13) gebildeten Schraubförderers ein Lagerteil (25) enthält, in der ein mit dem schraublinienförmigen Organ (11) axial verstellbar ist, sodass das schraublinienförmige Organ gespannt werden kann.

5. Futterdosierwagen nach einem oder mehreren der vorangehenden Ansprüche, **dadurch gekennzeichnet,** dass der horizontale Rohrteil (10) an seiner Obenseite eine einzige Oeffnung hat, die eine Verbindung mit dem Vorratbehälter bildet.

6. Futterdosierwagen nach einem oder mehreren der vorangehenden Ansprüche, **dadurch gekennzeichnet,** dass der Aussenquerschnitt des schraublinienförmigen Organs 10 bis 15 mm kleiner ist als die lichte Weite des Rohrs (12,13).

7. Futterdosierwagen nach einem oder mehreren der vorangehenden Ansprüche mit am Abfuhrende des Rohrs eine oder mehrere Seitenöffnungen im Rohr, **dadurch gekennzeichnet,** dass im Endbezirk des schraublinienförmigen Organs ein zentraler zilindrischer Stab (28) angeordnet ist mit einem Durchmesser, der erheblich kleiner ist als der Innendurchmesser des schraublinienförmigen Organs (11) und einer der Förderrichtung entgegen gerichteten Spitze (29).

8. Futterdosierwagen nach Anspruch 7, **dadurch gekennzeichnet,** dass der Stab in Höhe der Seitenöffnungen radiale Flügel (30,31,32,33) trägt zwischen benachbarten Windungen des schraublinienförmigen Organs (11).

FIG. 1

FIG. 3

FIG. 2

FIG. 4

Europäisches
Patentamt

# EUROPÄISCHER RECHERCHENBERICHT

Nummer der Anmeldung

EP 92 20 0681

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | US-A-4 223 638 (SAPPINGTON) <br> * Spalte 4, Zeile 17 - Zeile 55; Abbildungen 1,5 * | 1-3,5 | A01K5/02 <br> B65G33/32 <br> B65G33/16 |
| A | | 6 | |
| | --- | | |
| A | BE-A-416 734 (SCHWABACH) <br> * Seite 7, letzter Absatz; Abbildungen 7-8 * | 4 | |
| | --- | | |
| A | WO-A-8 908 067 (TAUPIN) <br> * Seite 6, Zeile 3 - Seite 7, Zeile 19; Abbildung 2 * | 1-3 | |
| | ----- | | |

|  | RECHERCHIERTE SACHGEBIETE (Int. Cl.5 ) |
|---|---|
| | A01K <br> B65G |

Der vorliegende Recherchenbericht wurde für alle Patentansprüche erstellt

| Recherchenort | Abschlußdatum der Recherche | Prüfer |
|---|---|---|
| DEN HAAG | 22 JUNI 1992 | FONTS CAVESTANY A. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
......................................................................
& : Mitglied der gleichen Patentfamilie, übereinstimmendes
    Dokument

EPO FORM 1503 03.82 (P0400)